# EUROPEAN PATENT APPLICATION

(11) **EP 4 221 075 A1**
(43) Date of publication of application: **02.08.2023**
(21) Application number: 20955165.4
(22) Date of filing: 23.09.2020
(51) Int. Cl.: H04L 9/32, G06F 16/182

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: HIGASHIKADO, Yoshiki, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2020/035843
(87) International publication number: WO 2022/064571

(57) **Abstract**

An information processing device (100) stores a BC (110). The information processing device (100) extracts information satisfying a specific condition from among a plurality of pieces of information included in a plurality of blocks including a block (111) and existing before the block (111) in the BC (110). The information processing device (100) generates a block (113) storing new information including the extracted information. A hash value calculated from the new information is equal to a hash value calculated from the information included in the block (111). The information processing device (100) deletes, from the BC (110), the plurality of blocks including the block (111) and existing before the block (111), and links the generated new block (113) immediately before the block (112) in the BC (110).

## Description

### FIELD

The present invention relates to a control method, a control program, and an information processing device.

### BACKGROUND

Conventionally, there is a tamper-resistant list called a blockchain that implements a distributed ledger for managing transaction information by linking blocks storing the transaction information. The transaction information is called, for example, a transaction (Tx).

As prior art, for example, there is a technique of detecting whether or not block data satisfying archiving conditions including access frequency and a height value of block data exists in a blockchain node and copying the block data satisfying the archiving conditions locally.

### CITATION LIST

### [PATENT DOCUMENT]

Patent Document 1: Japanese National Publication of International Patent Application No. 2019-532401

### SUMMARY

### [TECHNICAL PROBLEM]

However, according to conventional techniques, it is not possible to suppress an increase in a blockchain data amount while ensuring tamper resistance. For example, no matter how many new blocks are added to a blockchain to ensure the tamper resistance, existing blocks may not be deleted, and all blocks need to remain.

In one aspect, an object of the present invention is to suppress an increase in a blockchain data amount.

### [SOLUTION TO PROBLEM]

According to one embodiment, there are proposed a control method, a control program, and an information processing device that extract, at a time of deleting, from a blockchain, one or a plurality of blocks preceding a certain block among a plurality of blocks included in the blockchain, information that satisfies a specific condition from among a plurality of pieces of information stored in the one or a plurality of blocks, generate a new block storing new information including the extracted information, which is generated such that a hash value calculated from the new information is equal to a hash value stored in the certain block, and link the generated new block before the certain block in the blockchain.

According to an aspect of the embodiments, a control method for causing a computer to perform a process includes at a time of deleting, from a blockchain, one or a plurality of blocks that precedes a certain block among a plurality of blocks included in the blockchain, extracting information that satisfies a specific condition from among a plurality of pieces of information stored in the one or a plurality of blocks; generating a new block that stores new information that includes the extracted information, the new information being generated such that a hash value calculated from the new information is equal to a hash value stored in the certain block; and linking the generated new block before the certain block in the blockchain.

### [ADVANTAGEOUS EFFECTS OF INVENTION]

In one aspect, it becomes possible to suppress an increase in a blockchain data amount.

### BRIEF DESCRIPTION OF DRAWINGS

FIG. 1 is an explanatory diagram illustrating an example of a control method according to an embodiment;
FIG. 2 is an explanatory diagram illustrating an example of a BC management system 200;
FIG. 3 is an explanatory diagram illustrating exemplary functional implementation of an information processing device 100;
FIG. 4 is a block diagram illustrating an exemplary hardware configuration of the information processing device 100;
FIG. 5 is a block diagram illustrating an exemplary functional configuration of the information processing device 100;
FIG. 6 is a block diagram illustrating an example of a specific functional configuration of the information processing device 100;
FIG. 7 is an explanatory diagram (part 1) illustrating exemplary operation of the information processing device 100;
FIG. 8 is an explanatory diagram (part 2) illustrating exemplary operation of the information processing device 100;
FIG. 9 is an explanatory diagram (part 3) illustrating exemplary operation of the information processing device 100;
FIG. 10 is an explanatory diagram illustrating a specific example of generating a new genesis block;
FIG. 11 is an explanatory diagram illustrating a specific example of generating a new genesis block when a BC is written in UTXO;
FIG. 12 is a flowchart illustrating an exemplary generation processing procedure; and
FIG. 13 is a flowchart illustrating an exemplary storage processing procedure.

### DESCRIPTION OF EMBODIMENTS

Hereinafter, an embodiment of a control method, a control program, and an information processing device according to the present invention will be described in detail with reference to the drawings.

### (Example of Control Method According to Embodiment)

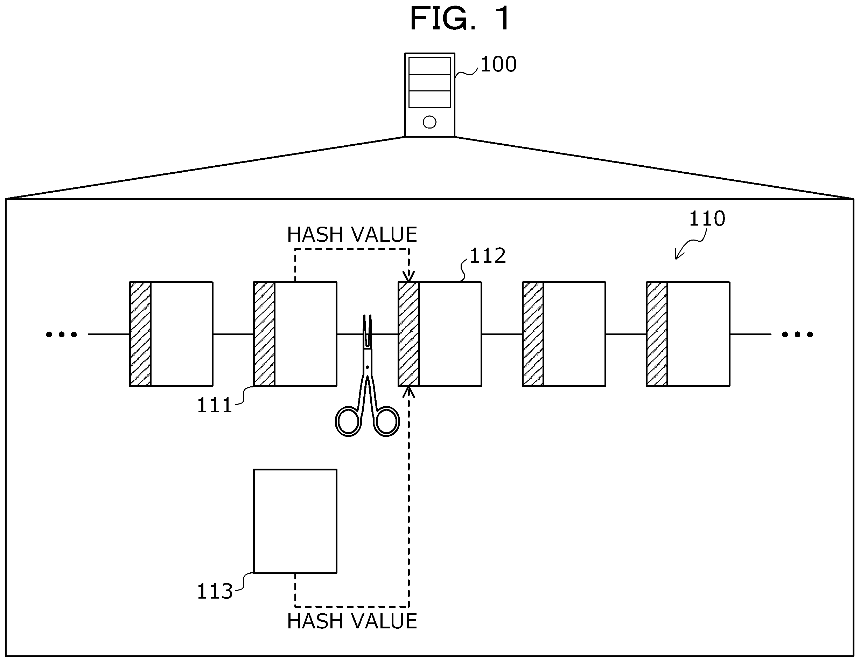

FIG. 1 is an explanatory diagram illustrating an example of the control method according to the embodiment. An information processing device 100 is a computer that manages blockchains. The information processing device 100 is, for example, a computer that serves as a node included in a blockchain network for managing blockchains. In the following descriptions, a blockchain may be referred to as a "BC".

The BC network forms a BC management system that manages BCs. The BC network includes a plurality of nodes. For example, each of the nodes included in the BC network stores and monitors the same BC, whereby the BC is managed. The BC is a list that implements a distributed ledger for managing transaction information by linking blocks in which the transaction information is registered. The transaction information is called, for example, a transaction (Tx). In the following descriptions, the transaction may be referred to as a "Tx".

The BC is resistant to tampering of transaction information. For example, each block included in the BC stores a hash value calculated from a block linked immediately before the block, which makes it possible to detect tampering of transaction information. Since the BC is resistant to tampering of transaction information, it has been used to store transaction information with evidence such as audit trails. For example, in a financial system, transaction information is accumulated using the BC to avoid tampering of the transaction information and to store the transaction information safely.

However, a BC data amount is caused to increase in ensuring the tamper resistance. For example, no matter how many new blocks are added to the BC to ensure the tamper resistance, existing blocks may not be deleted and all blocks need to remain, which leads to an increase in the BC data amount. Furthermore, at a time of backing up the BC, the entire BC is to be backed up in a specific storage area, which raises a problem that free spaces in the specific storage area tend to be depleted. Accordingly, there is a problem that it becomes difficult to operate the BC in the long term.

In view of the above, in the present embodiment, the control method that enables partial blocks in the BC to be baked up while maintaining the tamper resistance to suppress an increase in the BC data amount will be described.

In FIG. 1, the information processing device 100 stores a BC 110. The BC 110 includes a plurality of blocks. The BC 110 includes, for example, a block 111, a block 112, and the like. Each block included in the BC 110 other than the top block stores a hash value calculated from the block linked immediately before the block. The top block is called a genesis block. In the example of FIG. 1, the block 112 stores a hash value calculated from the block 111.

Here, it is assumed that, among the plurality of blocks included in the BC 110, one or a plurality of blocks preceding a target block is desired to be deleted from the BC 110. In the example of FIG.1, the block 112 is the target block. In other words, it is assumed that, among the plurality of blocks included in the BC 110, a plurality of blocks preceding the block 112 is desired to be deleted. Specifically, the plurality of blocks preceding the block 112 specifically indicates the plurality of blocks including the block 111 and existing before the block 111. In the example of FIG. 1, the boundary between the blocks to be deleted and the blocks to be left without being deleted is indicated by a scissors mark.

(1-1) The information processing device 100 extracts information satisfying a specific condition from a plurality of pieces of information stored in one or a plurality of blocks to be deleted. The specific condition is a condition for specifying information to be preferably left in the BC 110 after one or a plurality of blocks is deleted. The specific condition is, for example, a condition for specifying latest information of a plurality of pieces of information regarding a certain attribute stored in one or a plurality of blocks. In the example of FIG. 1, the information processing device 100 extracts information satisfying the specific condition from the plurality of pieces of information included in the plurality of blocks including the block 111 and existing before the block 111, for example.

(1-2) The information processing device 100 generates new information including the extracted information. The new information is generated in such a manner that the hash value calculated from the information is equal to the hash value stored in the target block. The information processing device 100 generates a new block storing the generated new information. In the example of FIG. 1, the information processing device 100 generates a block 113. The block 113 is, for example, a genesis block.

Here, since the hash value calculated from the information included in the block 113 is equal to the hash value calculated from the information included in the block 111, the block 113 enters a state of being linkable to the position immediately before the block 112 in the BC 110 in place of the block 111. Furthermore, since the block 113 stores the new information including the extracted information, it becomes possible to retain information preferably left in the BC 110. As a result thereof, it becomes possible to leave information determined to be useful in the BC 110 while maintaining the tamper resistance of the BC 110 even when a plurality of blocks is deleted from the BC 110.

(1-3) The information processing device 100 links the generated new block before the target block in the BC 110. In the example of FIG. 1, the information processing device 100 deletes, from the BC 110, the plurality of blocks including the block 111 and existing before the block 111, and links the generated new block 113 immediately before the block 112 in the BC 110.

As a result, the information processing device 100 is enabled to avoid the hash value stored in each block included in the BC 110 from becoming an invalid value after deleting one or a plurality of blocks from the BC 110. For example, the information processing device 100 is enabled to make the hash value stored in the block 112 a valid value corresponding to the immediately preceding block 113, not an invalid value, after deleting the plurality of blocks including the block 111 and existing before the block 111. Accordingly, the information processing device 100 is enabled to delete one or a plurality of blocks from the BC 110 while maintaining the tamper resistance of the BC 110.

Furthermore, the information processing device 100 is enabled to store new information including the extracted information in the block 113, and to leave information preferably left in the BC 110 in the BC 110. Accordingly, even when one or a plurality of blocks is deleted from the BC 110, the information processing device 100 is enabled to maintain utility of the BC 110 while maintaining the tamper resistance of the BC 110, which makes it possible to delete one or a plurality of blocks.

The information processing device 100 is enabled to refer to the information preferably left in the BC 110 by referring to the BC 110 without referring to one or a plurality of backed up blocks. Accordingly, the information processing device 100 is enabled to maintain the utility of the BC 110 while maintaining the tamper resistance of the BC 110.

### (Exemplary BC Management System 200)

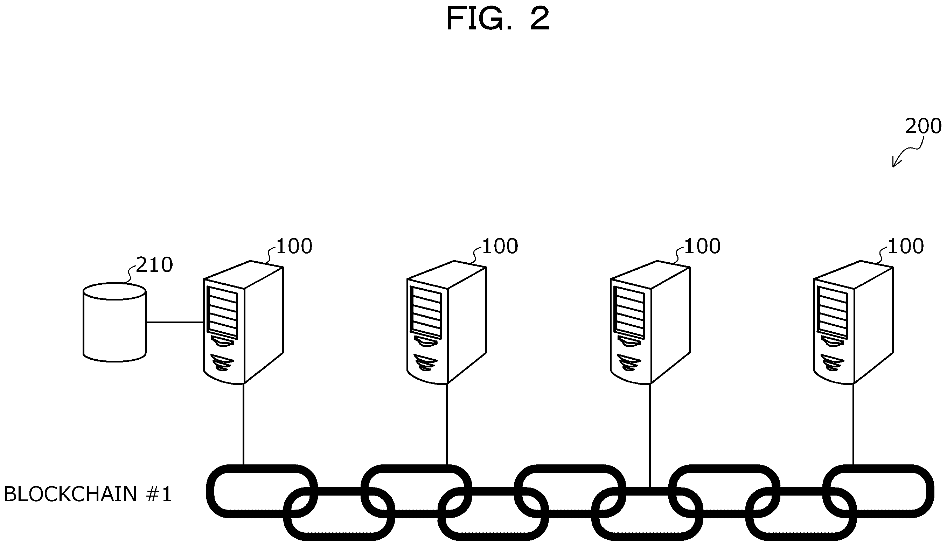

Next, an example of a BC management system 200 to which the information processing device 100 illustrated in FIG. 1 is applied will be described with reference to FIG. 2.

FIG. 2 is an explanatory diagram illustrating an example of the BC management system 200. In FIG. 2, the BC management system 200 includes a plurality of the information processing devices 100.

In the BC management system 200, the information processing devices 100 are coupled to each other via a wired or wireless network 410. The network 410 is, for example, a local area network (LAN), a wide area network (WAN), the Internet, or the like.

Each of the information processing devices 100 stores the same BC #1. At least one of the information processing devices 100 has a storage area 210 for backing up the BC #1. Each of the information processing devices 100 adds blocks to the BC #1 stored therein. Each of the information processing devices 100 receives, from a terminal device (not illustrated), various types of information to be stored in a block, for example. Each of the information processing devices 100 generates a new block storing the various types of received information, and adds it to the BC #1 stored in its own device, for example.

Each of the information processing devices 100 deletes a part of the blocks from the BC #1 stored therein. Each of the information processing devices 100 generates a new genesis block at the time of deleting the part of the blocks. Each of the information processing devices 100 links the generated new genesis block to the BC #1 as a block preceding the remaining blocks not to be deleted. The information processing device 100 having the storage area 210 backs up the part of the blocks to be deleted in the storage area 210 at the time of deleting the part of the blocks.

Each of the information processing devices 100 has the same encryption scheme, the same hash function, and the like, and manages the BC #1 in a similar manner. The information processing device 100 is, for example, a server, a personal computer (PC), or the like.

As an example of the BC management system 200, there is a public type, consortium type, or private type BC management system 200. As an example of the consortium type BC management system 200, there is a Hyperledger Fabric type BC management system 200. The BC management system 200 is applied to, for example, a financial system. The BC may be written in unspent transaction output (UTXO).

Although the case where each of the information processing devices 100 stores the same BC #1 has been described here, it is not limited to this. For example, each of the information processing devices 100 may store at least a part of the blocks in the BC #1. In this case, the blocks stored in the individual information processing devices 100 are combined to form the BC #1.

### (Exemplary Implementation of Information Processing Device 100)

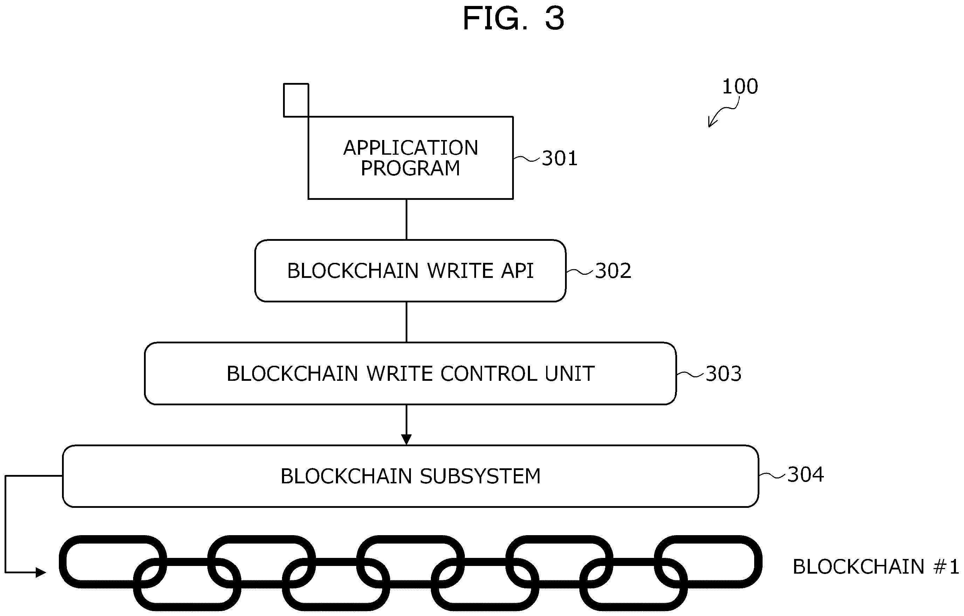

Next, exemplary functional implementation of the information processing device 100 will be described with reference to FIG. 3.

FIG. 3 is an explanatory diagram illustrating exemplary functional implementation of the information processing device 100. Functions of the information processing device 100 are implemented using an application programming interface (API) of an operating system (OS). As illustrated in FIG. 3, the information processing device 100 implements, for example, each of functions of an application program 301, a BC write API 302, a BC write control unit 303, and a BC subsystem 304 in the OS.

The application program 301 is an application program that uses the BC #1. The BC write API 302 is an API for writing data to the BC #1, and writes data in the BC #1. The BC write control unit 303 transfers parameters between the BC write API 302 and the BC subsystem 304 when data is written in the BC #1. The BC subsystem 304 controls data writing to the BC #1. The BC subsystem 304 selects, for example, a hash function to be used when data is written in the BC #1.

The application program 301 calls the BC write API 302, and requests the BC write control unit 303 to perform data writing processing. The BC write control unit 303 requests the BC subsystem 304 to perform a data writing operation on the BC #1. The BC subsystem 304 selects either a normal hash function or a chameleon hash function, and writes data to the BC #1 using the selected hash function. Regarding the chameleon hash function, the following Reference Document 1 may be referred to, for example.

Reference Document 1: KRAWCZYK, H. "Chameleon signatures." Proc. NDSS, 2000. 2000.

### (Exemplary Hardware Configuration of Information Processing Device 100)

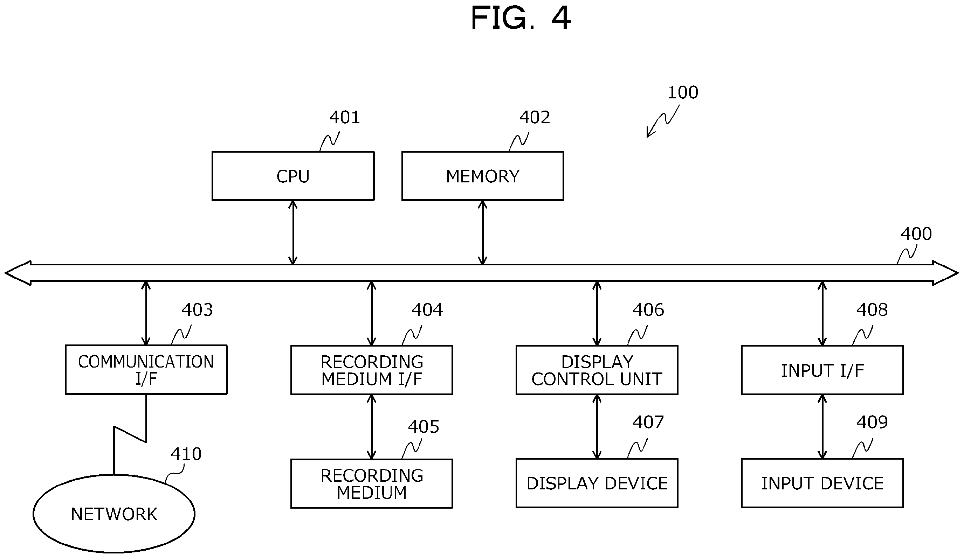

Next, an exemplary hardware configuration of the information processing device 100 will be described with reference to FIG. 4.

FIG. 4 is a block diagram illustrating an exemplary hardware configuration of the information processing device 100. In FIG.4, the information processing device 100 includes a central processing unit (CPU) 401, a memory 402, a communication interface (I/F) 403, a recording medium I/F 404, and a recording medium 405. The information processing device 100 further includes a display control unit 406, a display device 407, an input I/F 408, and an input device 409. Furthermore, the individual components are coupled to each other by a bus 400.

Here, the CPU 401 takes overall control of the information processing device 100. The memory 402 includes, for example, a read only memory (ROM), a random access memory (RAM), a flash ROM, and the like. Specifically, for example, the flash ROM or the ROM stores various programs, and the RAM is used as a work area for the CPU 401. Specifically, for example, the ROM stores a program such as a basic input/output system (BIOS) or the like. The programs stored in the memory 402 are loaded into the CPU 401, thereby causing the CPU 401 to execute coded processing.

The communication I/F 403 is coupled to the network 410 through a communication line, and is coupled to another computer through the network 410. Then, the communication I/F 403 manages an interface between the network 410 and the inside, and controls input and output of data from the another computer. The communication I/F 403 is, for example, a modem, a LAN adapter, or the like.

The recording medium I/F 404 controls reading/writing of data from/to the recording medium 405 under the control of the CPU 401. The recording medium I/F 404 is, for example, a disk drive, a solid state drive (SSD), a universal serial bus (USB) port, or the like. The recording medium 405 is a nonvolatile memory that stores data written under the control of the recording medium I/F 404. Specifically, the recording medium 405 stores all or a part of the BC #1, for example. Specifically, the recording medium 405 backs up a part the BC #1, for example. The recording medium 405 is, for example, a disk, a semiconductor memory, a USB memory, or the like. The recording medium 405 may be attachable to and detachable from the information processing device 100.

The display control unit 406 controls the display device 407. The display device 407 displays data such as a document, an image, functional information, or the like as well as a cursor, an icon, or a tool box. The display device 407 is, for example, a cathode ray tube (CRT), a liquid crystal display, an organic electroluminescence (EL) display, an electronic paper display, or the like. The display device 407 may be combined with the input device 409. The display device 407 may be, for example, a touch panel type input pad.

The input I/F 408 controls the input device 409. The input device 409 has keys for inputting characters, numbers, various instructions, and the like, and inputs data. The input device 409 may be a keyboard, a mouse, or the like. Furthermore, the input device 409 may be a touch panel type input pad, a numeric keypad, or the like.

The information processing device 100 may include, for example, a keyboard, a mouse, a display, a printer, a scanner, a microphone, a speaker, or the like, in addition to the components described. Furthermore, the information processing device 100 may include a plurality of the recording medium I/Fs 404 and the recording media 405. Furthermore, the information processing device 100 does not have to include the recording medium I/F 404 or the recording medium 405.

Although the case where the CPU 401 takes overall control of the information processing device 100 has been described here, it is not limited to this. For example, the information processing device 100 may include a micro processing unit (MPU), a digital signal processor (DSP), an application specific integrated circuit (ASIC), a programmable logic device (PLD), a field programmable gate array (FPGA), or the like. In this case, any of the MPU, DSP, ASIC, PLD, FPGA, and the like takes overall control of the information processing device 100.

Furthermore, the information processing device 100 may include a combination of at least two types of the MPU, DSP, ASIC, PLD, and FPGA, for example. In this case, the combination of at least two types of the MPU, DSP, ASIC, PLD, and FPGA takes overall control of the information processing device 100.

### (Exemplary Functional Configuration of Information Processing Device 100)

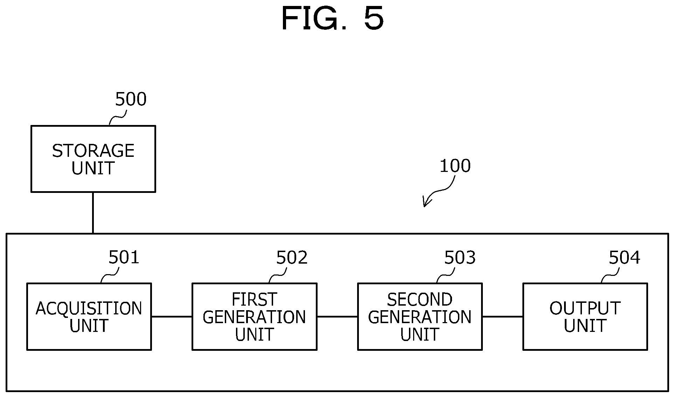

Next, an exemplary functional configuration of the information processing device 100 will be described with reference to FIG. 5.

FIG. 5 is a block diagram illustrating an exemplary functional configuration of the information processing device 100. The information processing device 100 includes a storage unit 500, an acquisition unit 501, a first generation unit 502, a second generation unit 503, and an output unit 504.

The storage unit 500 is implemented by, for example, a storage area such as the memory 402 or the recording medium 405 illustrated in FIG. 4. Hereinafter, a case where the storage unit 500 is included in the information processing device 100 will be described, but it is not limited to this. For example, there may be a case where the storage unit 500 is included in a device different from the information processing device 100, and the information processing device 100 may refer to stored contents of the storage unit 500.

The acquisition unit 501 to the output unit 504 function as an example of a control unit. Specifically, for example, the acquisition unit 501 to the output unit 504 implement functions thereof by causing the CPU 401 to execute a program stored in a storage area such as the memory 402 or the recording medium 405 illustrated in FIG. 4, or by the communication I/F 403. A processing result of each functional unit is stored in, for example, a storage area such as the memory 402 or the recording medium 405 illustrated in FIG. 4.

The storage unit 500 stores various types of information referred to or updated in processing of each functional unit. The storage unit 500 stores all or a part of the BC. The storage unit 500 stores, for example, the entire BC. The storage unit 500 has, for example, a specific storage area for backup, and stores a part of the BC in the specific storage area for backup. The storage area for storing the entire BC and the storage area for storing a part of the BC may be physically different storage areas.

The storage unit 500 stores a first calculation method and a second calculation method to be used at a time of generating a block to be added to the BC. The first calculation method is a calculation method that enables calculation of the same hash value from different information. The first calculation method calculates a hash value of a first type. The first calculation method is, for example, a calculation method using a chameleon hash function. The hash value of the first type is a chameleon hash value. The chameleon hash function is a hash function for calculating a chameleon hash value. The second calculation method is a calculation method with hash value collision resistance higher than that of the first calculation method. The second calculation method calculates a hash value of a second type. The second calculation method is, for example, a secure hash algorithm (SHA).

The acquisition unit 501 obtains various types of information to be used in the processing of each functional unit. The acquisition unit 501 stores the various types of obtained information in the storage unit 500, or outputs them to each functional unit. Furthermore, the acquisition unit 501 may output the various types of information stored in the storage unit 500 to each functional unit. The acquisition unit 501 obtains the various types of information based on, for example, an operation input by a user. The acquisition unit 501 may receive the various types of information from, for example, a device different from the information processing device 100. Specifically, the acquisition unit 501 obtains data to be stored in a block. More specifically, the acquisition unit 501 obtains data to be stored in a block by receiving it from another computer.

The acquisition unit 501 may accept a start trigger to start the processing of any functional unit. The start trigger is, for example, a predetermined operation input made by the user. The start trigger may be, for example, reception of predetermined information from another computer. The start trigger may be, for example, output of predetermined information by any functional unit. The acquisition unit 501 may accept, for example, a signal generated by a timer at regular time intervals as a start trigger for starting the processing of the first generation unit 502 and the second generation unit 503. For example, the acquisition unit 501 may accept reception of data to be stored in a block as a start trigger for starting the processing of the first generation unit 502 and the second generation unit 503.

The first generation unit 502 generates a subsequent block to be linked after the block at the end of the BC. For example, the first generation unit 502 generates a subsequent block to be linked after the block at the end of the BC storing the data obtained by the acquisition unit 501 at regular time intervals. Then, the first generation unit 502 links the generated subsequent block after the block at the end of the BC, for example. As a result, the first generation unit 502 is enabled to add a new block in the BC to update the BC.

Specifically, the first generation unit 502 generates a subsequent block to be linked after the block at the end of the BC storing the hash value of the first type calculated based on the block at the end of the BC by the first calculation method. More specifically, the first generation unit 502 generates a subsequent block to be linked after the block at the end of the BC storing the hash value of the first type calculated based on the block at the end of the BC by the first calculation method at regular time intervals. As a result, the first generation unit 502 is enabled to generate, after the block at the end of the BC, a new block to be a calculation source of the hash value stored in the generated subsequent block other than the block at the end of the BC.

Specifically, at predetermined timing, the first generation unit 502 generates a subsequent block to be linked after the block at the end of the BC storing the hash value of the first type calculated based on the block at the end of the BC by the first calculation method. The predetermined timing is, for example, any timing of a plurality of timings at regular time intervals. Specifically, the predetermined timing is one timing per a predetermined number of times out of the plurality of timings at regular time intervals. The predetermined timing may be, for example, the timing at which specific data to be stored in the block is received. The predetermined timing may be, for example, timing specified by the user. As a result, the first generation unit 502 is enabled to generate, after the block at the end of the BC, a new block to be a calculation source of the hash value stored in the generated subsequent block other than the block at the end of the BC.

Specifically, at times other than the predetermined timing, the first generation unit 502 generates a subsequent block to be linked after the block at the end of the BC storing the hash value of the second type calculated based on the block at the end of the BC by the second calculation method. As a result, the first generation unit 502 is enabled to enhance the collision resistance of hash values stored in blocks generated at times other than the predetermined timing, and to improve the security of the BC.

Specifically, at the predetermined timing, the first generation unit 502 may generate a subsequent first block to be linked after the block at the end of the BC storing key information to be used in the first calculation method. The key information is, for example, a combination of a private key and a random number. The key information is stored in the first block in, for example, a state of being encrypted such that it may be decrypted after a specified time point. As a result, the first generation unit 502 is enabled to easily manage the key information and to make the key information available subsequently.

Thereafter, specifically, the first generation unit 502 may generates a subsequent second block to be linked after the first block in the BC storing the hash value of the first type calculated based on the first block by the first calculation method. As a result, the first generation unit 502 is enabled to generate, after the block at the end of the BC, a new block to be a calculation source of the hash value stored in the generated subsequent block other than the block at the end of the BC.

The second generation unit 503 deletes, from the BC, one or a plurality of blocks preceding a target block among the plurality of blocks included in the BC. The target block is a block storing the hash value of the first type among the plurality of blocks included in the BC. The target block is, for example, the second block. The one or a plurality of blocks is, for example, the first block. The one or a plurality of blocks is, for example, a plurality of blocks including the first block that exists before the first block including the first block.

For example, at specific timing, the second generation unit 503 deletes, from the BC, one or a plurality of blocks preceding the target block among the plurality of blocks included in the BC. The specific timing is, for example, timing at every preset backup time interval. The specific timing may be, for example, timing specified by the user. The specific timing may be, for example, timing at which the BC data amount satisfies a predetermined condition. The predetermined condition indicates, for example, that the BC data amount is equal to or larger than a certain amount. As a result, the second generation unit 503 is enabled to reduce the BC data amount.

At the time of deleting, from the BC, one or a plurality of blocks preceding the target block among the plurality of blocks included in the BC, the second generation unit 503 extracts information satisfying a specific condition from among a plurality of pieces of information stored in the one or a plurality of blocks. The specific condition is a condition for specifying information to be preferably left in the BC after the one or a plurality of blocks is deleted.

The specific condition is, for example, a condition for specifying latest information of a plurality of pieces of information regarding a certain attribute stored in one or a plurality of blocks. The attribute is, for example, an account. The account corresponds to, for example, a person or the like. The account corresponds to, for example, a bank account or the like. When the attribute is a bank account, the latest information is the final value of the balance of the bank account. The specific condition is, for example, data indicating the final output stored in any block when the BC is written in UTXO.

For example, at the time of deleting, from the BC, one or a plurality of blocks preceding the second block, the second generation unit 503 extracts information satisfying the specific condition from among the plurality of pieces of information stored in the one or a plurality of blocks. As a result, the second generation unit 503 is enabled to extract information to be preferably left in the BC even when one or a plurality of blocks is deleted so that the utility of the BC is not impaired, and to generate a block to be added to the top of the BC in place of the one or a plurality of blocks.

The second generation unit 503 generates new information including the extracted information. The new information is generated in such a manner that the hash value calculated from the information is equal to the hash value stored in the target block. For example, the second generation unit 503 generates new information including the extracted information based on the key information stored in the first block. The new information is generated in such a manner that the hash value calculated from the information is equal to the hash value of the first type stored in the second block.

Specifically, the second generation unit 503 obtains the key information stored in the first block after the specified time point. More specifically, the second generation unit 503 decrypts the key information stored in the first block in the encrypted state to obtain the key information after the specified time point. Specifically, the second generation unit 503 generates new information including the extracted information based on the obtained key information. As a result, the second generation unit 503 is enabled to generate, even when one or a plurality of blocks is deleted, a block to be added to the top of the BC in place of the one or a plurality of blocks so that BC consistency is not impaired.

The second generation unit 503 generates a new block storing the generated new information. The new block is a genesis block. Then, the second generation unit 503 links the generated new block before the target block in the BC. As a result, the second generation unit 503 is enabled to ensure the BC consistency when one or a plurality of blocks is deleted.

At the time of deleting, from the BC, one or a plurality of blocks preceding the target block among the plurality of blocks included in the BC, the second generation unit 503 stores the one or a plurality of blocks in a specific storage area. The specific storage area is, for example, the storage unit 500. The specific storage area may be, for example, an area other than the storage unit 500. Specifically, the specific storage area may be another computer. As a result, the second generation unit 503 is enabled to back up the one or a plurality of blocks to improve the convenience of the BC.

The output unit 504 outputs a processing result of at least any one of the functional units. An output format is, for example, display on a display, print output to a printer, transmission to an external device by the communication I/F 403, or storage in a storage area such as the memory 402, the recording medium 405, or the like. As a result, the output unit 504 is enabled to notify the user of the processing result of at least any one of the functional units to improve the convenience of the information processing device 100.

### (Example of Specific Functional Configuration of Information Processing Device 100)

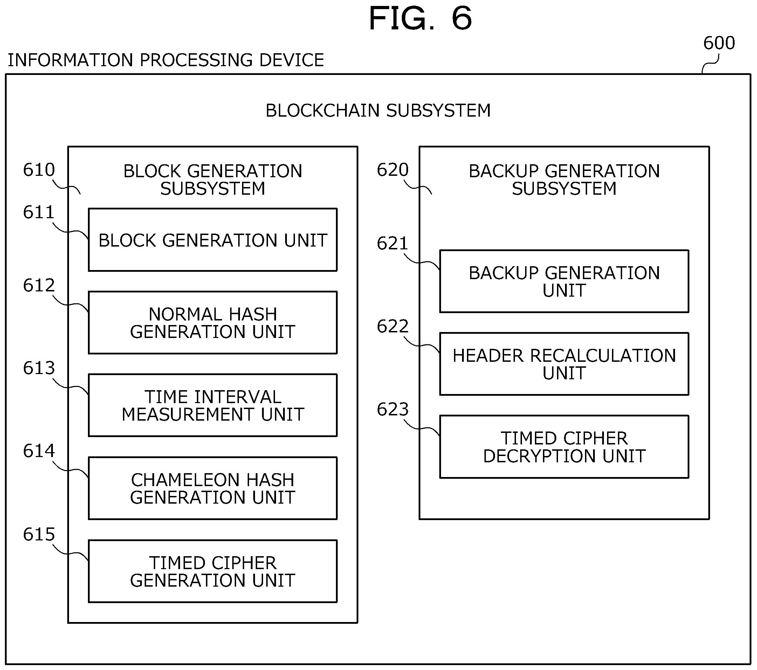

Next, an example of a specific functional configuration of the information processing device 100 will be described with reference to FIG. 6.

FIG. 6 is a block diagram illustrating an example of a specific functional configuration of the information processing device 100. The information processing device 100 includes, as a blockchain subsystem 600, a block generation subsystem 610 and a backup generation subsystem 620.

Specifically, for example, the block generation subsystem 610 and the backup generation subsystem 620 implement functions thereof by causing the CPU 401 to execute a program stored in a storage area such as the memory 402 or the recording medium 405 illustrated in FIG. 4. Specifically, the first generation unit 502 and the second generation unit 503 illustrated in FIG. 5 are implemented by the block generation subsystem 610 and the backup generation subsystem 620.

The block generation subsystem 610 includes a block generation unit 611, a normal hash generation unit 612, a time interval measurement unit 613, a chameleon hash generation unit 614, and a timed cipher generation unit 615. The block generation unit 611 receives data to be stored in a new block to be added to the BC from another computer. When the block generation unit 611 receives an instruction from the time interval measurement unit 613, it selects a hash function to be used at a time of generating a new block to be added to the BC, which is either a normal hash function or a chameleon hash function.

The block generation unit 611 generates, using the selected hash function, a new block to be added to the BC storing the received data. For example, when the block generation unit 611 has selected the normal hash function, it controls the normal hash generation unit 612 to obtain the normal hash value corresponding to the block at the end of the BC from the normal hash generation unit 612. Then, for example, the block generation unit 611 generates a new block in which the normal hash value is stored in the header and the received data is stored in the body, and links it after the block at the end of the BC to set it as a new block at the end of the BC.

For example, when the block generation unit 611 has selected the chameleon hash function, it controls the timed cipher generation unit 615 to obtain the encrypted key information from the timed cipher generation unit 615. The key information is used in the chameleon hash function. Furthermore, the block generation unit 611 controls the normal hash generation unit 612 to obtain the normal hash value corresponding to the block at the end of the BC from the normal hash generation unit 612. Then, the block generation unit 611 generates a new block in which the normal hash value is stored in the header and the encrypted key information is stored in the body, and links it after the block at the end of the BC to set it as a new block at the end of the BC.

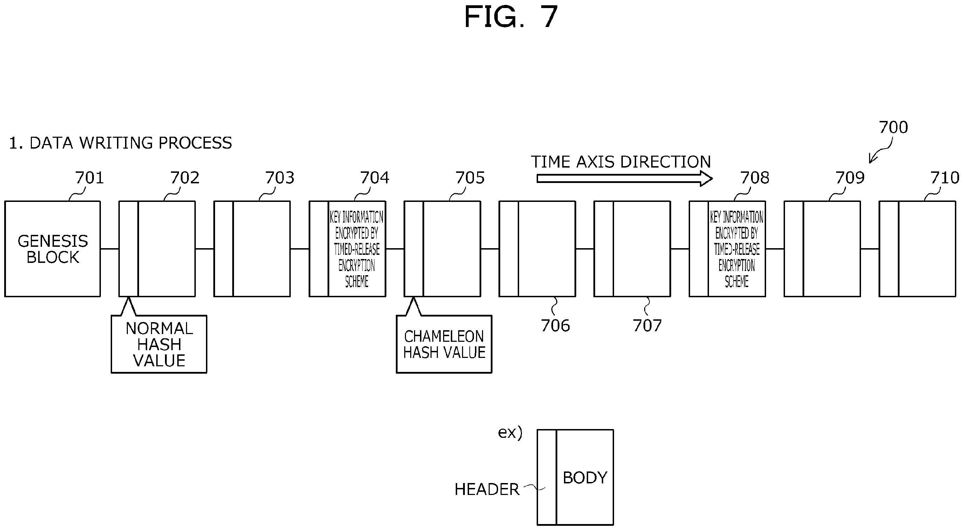

Moreover, the block generation unit 611 controls the chameleon hash generation unit 614 to obtain chameleon hash value corresponding to the block at the end of the BC from the chameleon hash generation unit 614. Then, the block generation unit 611 generates a new block in which the chameleon hash value is stored in the header and the received data is stored in the body, and links it after the block at the end of the BC to set it as a new block at the end of the BC. Specific examples of the new block generation will be described later with reference to FIGs. 7 to 9, for example.

Under the control of the block generation unit 611, the normal hash generation unit 612 calculates a normal hash value corresponding to the block at the end of the BC, and provides it to the block generation unit 611. The time interval measurement unit 613 outputs, to the block generation unit 611, an instruction to generate a new block to be added to the BC at regular time intervals.

Under the control of the block generation unit 611, the chameleon hash generation unit 614 calculates a chameleon hash value corresponding to the block at the end of the BC using the key information, and provides it to the block generation unit 611. Under the control of the block generation unit 611, the timed cipher generation unit 615 obtains the key information from the chameleon hash generation unit 614. The timed cipher generation unit 615 encrypts, according to a timed-release encryption scheme, the obtained key information in such a manner that it may be decrypted after specified timing, and provides it to the block generation unit 611 as data to be stored in a block.

The backup generation subsystem 620 includes a backup generation unit 621, a header recalculation unit 622, and a timed cipher decryption unit 623. The backup generation unit 621 backs up a part of blocks preceding a target block among the plurality of blocks in the BC, and then deletes the part of blocks preceding the target block among the plurality of blocks in the BC. The target block is a block storing the chameleon hash value. The part of blocks is a part of blocks preceding the block in which the encrypted key information is stored in the body, which precedes the target block.

The backup generation unit 621 backs up a part of blocks preceding the target block, for example. Next, the backup generation unit 621 controls, for example, the header recalculation unit 622 to obtain information satisfying a specific condition from the part of blocks preceding the target block. The specific condition is a condition for specifying information to be preferably left in the BC after the part of blocks is deleted. Furthermore, the backup generation unit 621 controls, for example, the timed cipher decryption unit 623 to obtain the key information used when the chameleon hash value is previously calculated.

Then, the backup generation unit 621 generates a genesis block including the obtained information and storing, in the body, new information that enables calculation of the chameleon hash value stored in the header of the target block based on the obtained key information, for example. Thereafter, the backup generation unit 621 deletes the part of blocks preceding the target block, for example. Furthermore, the backup generation unit 621 adds the generated genesis block to the BC as a new top block in the BC in place of the block existing immediately before the target block and storing the encrypted key information in the body.

Under the control of the backup generation unit 621, the header recalculation unit 622 extracts information satisfying the specific condition from the part of blocks preceding the target block, and provides it to the backup generation unit 621. Under the control of the backup generation unit 621, the timed cipher decryption unit 623 extracts the encrypted key information used when the chameleon hash value is previously calculated from the block existing immediately before the target block and storing the encrypted key information in the body. The timed cipher decryption unit 623 decrypts the extracted encrypted key information, and provides the decrypted key information to the backup generation unit 621.

### (Exemplary Operation of Information Processing Device 100)

Next, exemplary operation of the information processing device 100 will be described with reference to FIGs. 7 to 9.

FIGs. 7 to 9 are explanatory diagrams illustrating exemplary operation of the information processing device 100. In FIG. 7, the information processing device 100 executes data writing processing at regular time intervals, and generates a new block storing data to add it to a BC 700. The BC 700 illustrated in FIG. 7 is in a state after a plurality of blocks 701 to 710 is added.

For example, the information processing device 100 generates a genesis block 701, and generates the BC 700 including the genesis block 701. The genesis block 701 is a special block to be the top block of the BC 700. Thereafter, at regular time intervals, the information processing device 100 generates a new block to be added to the BC 700, which collectively stores data to be stored in the block received within a certain period of time.

Specifically, when the certain period of time has elapsed, the information processing device 100 determines whether or not it is specific timing. The specific timing is timing at every backup time interval. The backup time interval is preferably longer than the certain period of time, for example. Here, it is assumed that the information processing device 100 determines that it is not the specific timing. Since it is not the specific timing, the information processing device 100 calculates a normal hash value corresponding to the genesis block 701. The information processing device 100 generates a new block 702 in which the calculated normal hash value is stored in the header and data for the certain period of time is stored in the body, and links it after the genesis block 701 in the BC 700.

Similarly, when the certain period of time has elapsed, the information processing device 100 determines whether or not it is specific timing. Here, it is assumed that the information processing device 100 determines that it is not the specific timing. Since it is not the specific timing, the information processing device 100 calculates a normal hash value corresponding to the block 702 at the end of the BC 700. The information processing device 100 generates a new block 703 in which the calculated normal hash value is stored in the header and data for the certain period of time is stored in the body, and links it after the block 702 at the end of the BC 700.

Next, when the certain period of time has elapsed, the information processing device 100 determines whether or not it is specific timing. Here, it is assumed that the information processing device 100 determines that it is the specific timing. Since it is the specific timing, the information processing device 100 generates key information to be used at a time of calculating a chameleon hash value, and encrypts it by the timed-release encryption scheme. The key information is, for example, a private key and a random number.

Furthermore, the information processing device 100 calculates a normal hash value corresponding to the block 703 at the end of the BC 700. The information processing device 100 generates a new block 704 in which the calculated normal hash value is stored in the header and the key information encrypted by the timed-release encryption scheme is stored in the body, and links it after the block 703 at the end of the BC 700.

Then, the information processing device 100 calculates a chameleon hash value corresponding to the block 704 at the end of the BC 700 using the generated key information. The information processing device 100 generates a new block 705 in which the calculated chameleon hash value is stored in the header and data for the certain period of time is stored in the body, and links it after the block 704 at the end of the BC 700. Thereafter, the information processing device 100 generates blocks 706 to 710 to add them to the BC 700 in a similar manner.

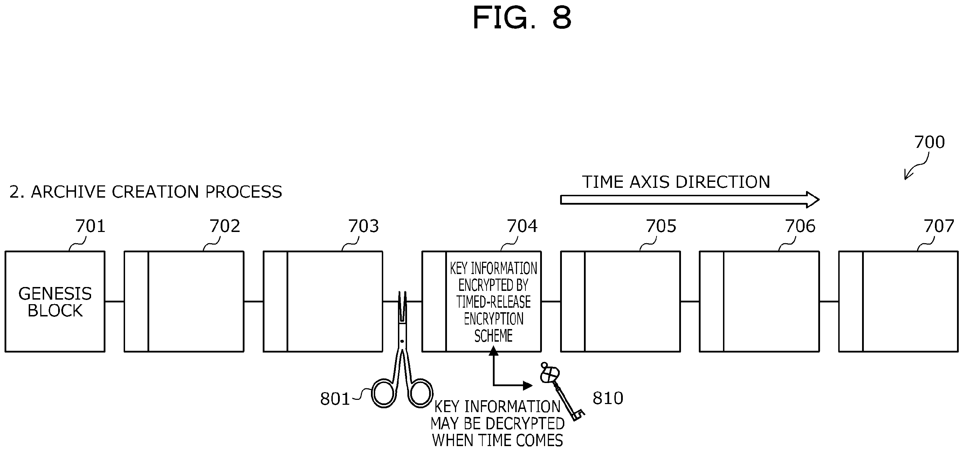

As a result, at the time of adding a plurality of blocks to the BC 700, the information processing device 100 is enabled to keep a part of the blocks in the BC 700 in a state that may be backed up and be deleted later. Furthermore, since the information processing device 100 uses a timed-release encryption scheme, it becomes possible to easily manage the key information. Since the information processing device 100 does not need to manage an encryption key for encrypting the key information, it becomes possible to reduce the burden of managing the key information. Next, descriptions for FIG. 8 will be made.

In FIG. 8, the information processing device 100 executes an archive creation process at a time point of backing up one or more blocks preceding the block storing the encrypted key information in the BC 700, and deletes the one or more blocks having been backed up. The backup time point is, for example, after a time point at which the encrypted key information enters a state that may be decrypted. Specifically, the backup time point is the time point at which the encrypted key information enters the state that may be decrypted. For example, the user sets a time point at which the encrypted key information may be decrypted, thereby setting the backup time point.

In the example of FIG. 8, it is assumed that encrypted key information 810 stored in the block 704 enters the state that may be decrypted and the backup time point for the blocks 701 to 703 preceding the block 704 has come. A boundary between the block 704 and the blocks 701 to 703 to be deleted after being backed up is indicated by a scissors mark 801.

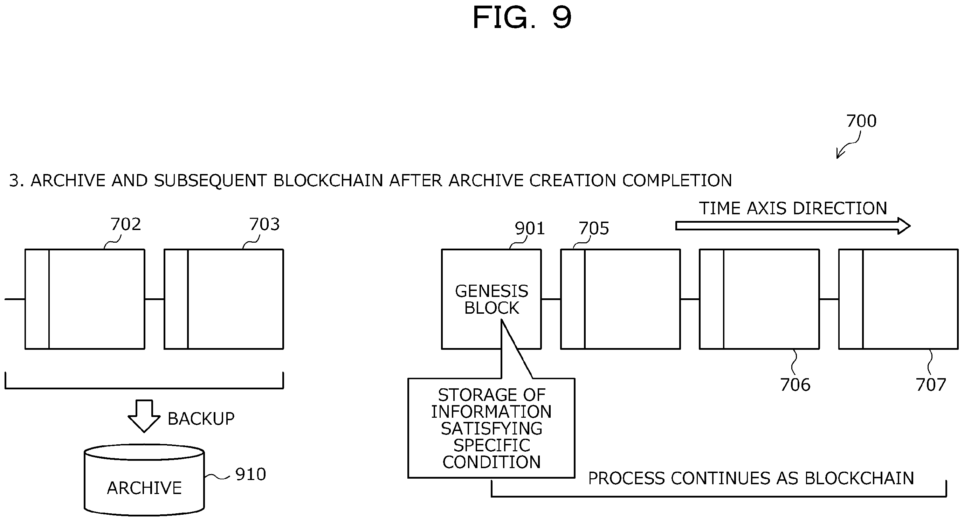

For example, the information processing device 100 extracts the encrypted key information 810 from the block 704 when the backup time point has come. The information processing device 100 decrypts the encrypted key information 810. The information processing device 100 extracts information satisfying the specific condition from the blocks 701 to 703 preceding the block 704. Next, descriptions for FIG. 9 will be made.

In FIG. 9, the information processing device 100 separates the blocks 701 to 703 preceding the block 704 from the BC 700, and backs up them in a specific storage area 910. The information processing device 100 generates, using the key information 810, new information that includes the extracted information and enables calculation of the same chameleon hash value as the chameleon hash value stored in the header of the block 705. The new information includes, for example, the extracted information and a padding string so that the same chameleon hash value as the chameleon hash value stored in the header of the block 705 may be calculated.

The information processing device 100 generates a new genesis block 901 storing the generated new information, and links it immediately before the block 705 in the BC 700 as a top block of the BC 700. As a result, the information processing device 100 is enabled to remove the blocks 701 to 703 from the BC 700 without impairing the consistency of the BC 700, and to reduce the data amount of the BC 700. The consistency indicates validity of a chain of multiple blocks in the BC 700 based on the hash values stored in the headers of the individual blocks. Furthermore, the information processing device 100 is enabled to maintain the tamper resistance of the BC 700.

### (Specific Example of New Genesis Block Generation)

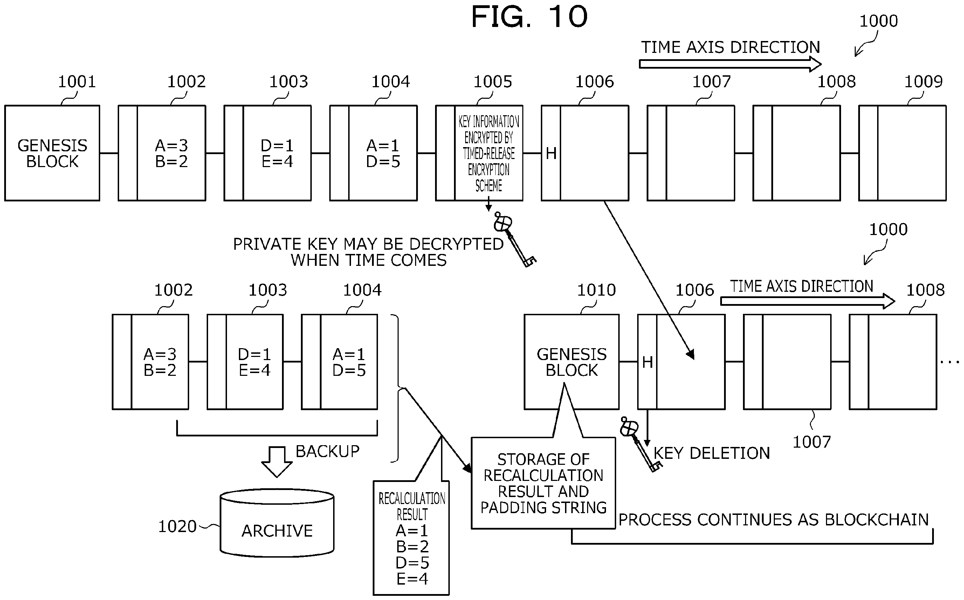

Next, a specific example in which the information processing device 100 generates a new genesis block will be described with reference to FIG. 10.

FIG. 10 is an explanatory diagram illustrating a specific example of generating a new genesis block. In the example of FIG. 10, the information processing device 100 stores a BC 1000. The BC 1000 includes blocks 1001 to 1009. The block 1001 is a genesis block. The block 1002 stores data A = 3 and B = 2. The block 1003 stores data D = 1 and E = 4. The block 1004 stores data A = 1 and D = 5. The block 1005 stores key information encrypted by the timed-release encryption scheme. The block 1006 stores a chameleon hash value in its header.

Here, a case where the information processing device 100 removes the blocks 1001 to 1004 from the BC 1000 and backs up them will be described. In this case, the information processing device 100 extracts data satisfying the specific condition from the blocks 1001 to 1004. For example, the information processing device 100 extracts only latest data for each attribute from the blocks 1001 to 1004, and recalculates data to be stored in a new genesis block 1010. Specifically, the information processing device 100 extracts the data A = 1, B = 2, D = 5, and E = 4, and sets them as data to be stored in the new genesis block 1010.

The information processing device 100 identifies, using the key information, a combination that is a combination of the set data and a padding string and serves as a calculation source of the chameleon hash value stored in the header of the block 1006 based on a chameleon hash function CH(*). The information processing device 100 identifies, for example, a combination of data m2 and a padding string o.

Here, H = CH(m1, r1) = CH(m2 + a, r2) is established. The reference H represents a chameleon hash value. The reference m1 represents a message. The reference m1 represents, for example, data stored in the body of the block 1004. The reference r1 represents a random number. The reference r2 represents a random number. Furthermore, according to the definition of the chameleon hash function, g^(m2 + α)^{∗}y^(r2)mod p = H is established. The information processing device 100 sets r2 and searches for a that satisfies g^(m2 + α)^{∗}y^(r2)mod p = H by a brute-force search method, thereby identifying the combination of the data m2 and the padding string a.

The information processing device 100 generates a new genesis block 1010 storing the identified combination, and links it immediately before the block 1006. Furthermore, the information processing device 100 backs up the blocks 1001 to 1004 in a specific storage area 1020. Thereafter, the information processing device 100 continues the operation of the BC 1000.

As a result, the information processing device 100 is enabled to remove the blocks 1001 to 1004 from the BC 1000 without impairing the consistency of the BC 1000, and to reduce the data amount of the BC 1000. Furthermore, the information processing device 100 is enabled to maintain the tamper resistance of the BC 1000. Furthermore, the information processing device 100 replaces the block 1005 with the genesis block 1010 and deletes it, whereby the encrypted key information may be deleted. Accordingly, the information processing device 100 is enabled to reduce the risk of the key information being abused by an attacker.

### (Specific Example of New Genesis Block Generation in BC Written in UTXO)

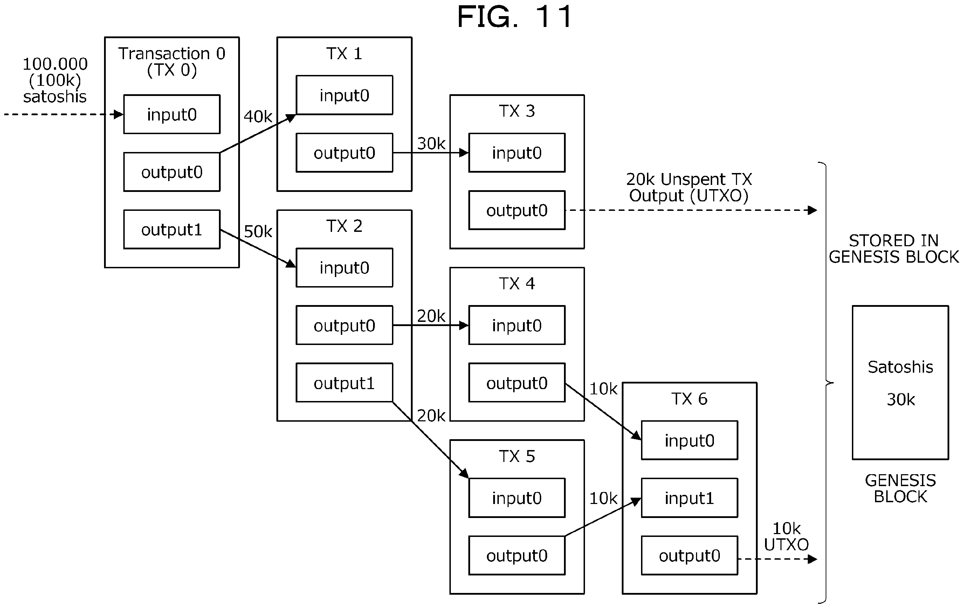

Next, a specific example in which the information processing device 100 generates a new genesis block when the BC is written in UTXO will be described with reference to FIG. 11.

FIG. 11 is an explanatory diagram illustrating a specific example of generating a new genesis block when the BC is written in UTXO. In the example of FIG. 11, it is assumed that transactions 0 to 6 are stored, as data of a certain user, in a plurality of blocks to be deleted after being backed up. Each of the transactions 0 to 6 includes an input and an output.

In FIG. 11, the information processing device 100 generates a new genesis block collectively storing unspent Tx outputs in the transactions 0 to 6, which are not ultimately inputs. As a result, the information processing device 100 may be applied even when the BC is written in UTXO, and may reduce the BC data amount.

### (Generation Processing Procedure)

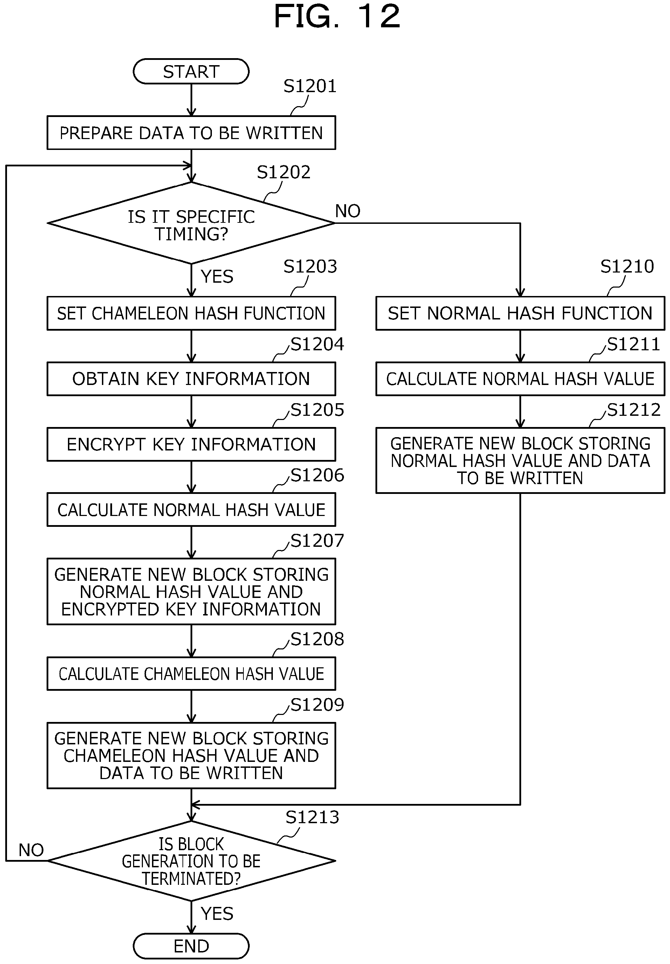

Next, an exemplary generation processing procedure executed by the information processing device 100 will be described with reference to FIG. 12. A generation process is implemented by, for example, the CPU 401, a storage area such as the memory 402 or the recording medium 405, and the communication I/F 403 illustrated in FIG. 4.

FIG. 12 is a flowchart illustrating an exemplary generation processing procedure. In FIG. 12, the information processing device 100 prepares data to be written via the BC write API 302 (step S1201).

Next, the information processing device 100 determines whether or not the current time point corresponds to specific timing existing at backup time intervals (step S1202). Here, if it corresponds to the specific timing (Yes in step S1202), the information processing device 100 proceeds to processing of step S1203. On the other hand, if it does not correspond to the specific timing (No in step S1202), the information processing device 100 proceeds to processing of step S1210.

In step S1203, the information processing device 100 sets a chameleon hash function to a hash function to be used at a time of generating a new block for storing the data to be written (step S1203).

Next, the information processing device 100 obtains key information including a private key and a random number for calculating a chameleon hash value, which is used for the chameleon hash function (step S1204). Then, the information processing device 100 encrypts the obtained key information using the timed-release encryption scheme (step S1205).

Next, the information processing device 100 calculates a normal hash value corresponding to the block at the end of the BC using a normal hash function (step S1206). Then, the information processing device 100 generates a new block storing the calculated normal hash value and the encrypted key information, and links it to the BC (step S1207).

Next, the information processing device 100 calculates a chameleon hash value corresponding to the block at the end of the BC using the chameleon hash function (step S1208). Then, the information processing device 100 generates a new block storing the calculated chameleon hash value and the data to be written, and links it to the BC (step S1209). Thereafter, the information processing device 100 proceeds to processing of step S1213.

In step S1210, the information processing device 100 sets the normal hash function to the hash function to be used at the time of generating a new block for storing the data to be written (step S1210).

Next, the information processing device 100 calculates a normal hash value corresponding to the block at the end of the BC using the normal hash function (step S1211). Then, the information processing device 100 generates a new block storing the calculated normal hash value and the data to be written, and links it to the BC (step S1212). Thereafter, the information processing device 100 proceeds to processing of step S1213.

In step S1213, the information processing device 100 determines whether or not to terminate the block generation (step S1213). Here, if the block generation is not terminated (No in step S1213), the information processing device 100 returns to the processing of step S1202. On the other hand, if the block generation is terminated (Yes in step S1213), the information processing device 100 terminates the generation process. As a result, the information processing device 100 is enabled to delete blocks from the BC.

### (Storage Processing Procedure)

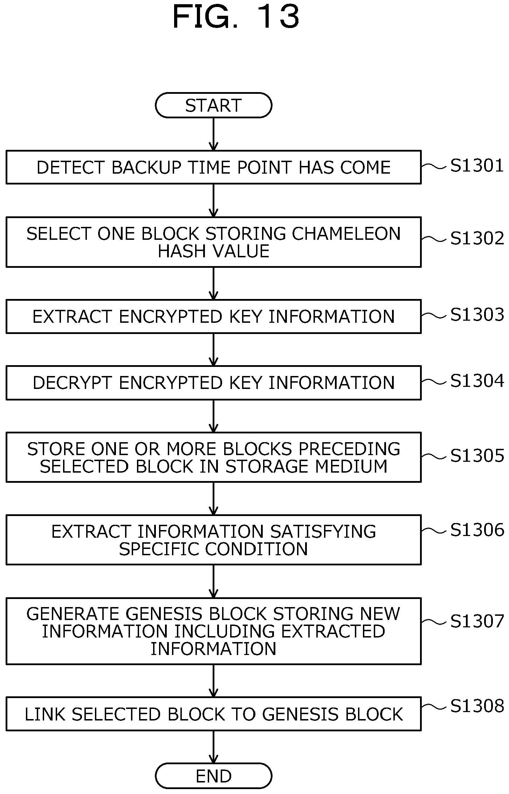

Next, an exemplary storage processing procedure executed by the information processing device 100 will be described with reference to FIG. 13. A storage process is implemented by, for example, the CPU 401, a storage area such as the memory 402 or the recording medium 405, and the communication I/F 403 illustrated in FIG. 4.

FIG. 13 is a flowchart illustrating an exemplary storage processing procedure. In FIG. 13, the information processing device 100 detects that a backup time point has come (step S1301).

Next, the information processing device 100 selects one of blocks storing a chameleon hash value in the BC (step S1302). Then, the information processing device 100 extracts encrypted key information from the block existing immediately before the selected block and storing the encrypted key information in the BC (step S1303).

Next, the information processing device 100 decrypts the extracted encrypted key information by the timed-release encryption scheme (step S1304). Then, the information processing device 100 stores, in a storage medium, one or a plurality of blocks preceding the selected block in the BC (step S1305).

Next, the information processing device 100 extracts information satisfying the specific condition from the one or a plurality of blocks preceding the selected block in the BC (step S1306). Then, the information processing device 100 generates, using the decrypted key information, a genesis block that enables calculation of the chameleon hash value stored in the selected block and stores new information including the extracted information (step S1307).

Next, the information processing device 100 links the selected block to the generated genesis block (step S1308). Then, the information processing device 100 terminates the storage process. As a result, the information processing device 100 is enabled to reduce the BC data amount.

Here, the information processing device 100 may swap some steps in the processing order in each of the flowcharts of FIGs. 12 and 13 to perform the process. For example, steps S1205 and S1206 may be swapped in the processing order. Furthermore, the information processing device 100 may omit the processing in some steps in each of the flowcharts of FIGs. 12 and 13. For example, the processing of steps S1202, and S1210 to S1212 may be omitted.

As described above, according to the information processing device 100, at the time of deleting one or a plurality of blocks preceding the target block included in the BC from the BC, it becomes possible to extract information satisfying a specific condition from among a plurality of pieces of information stored in the one or a plurality of blocks. According to the information processing device 100, it becomes possible to generate a new block storing new information including the extracted information, which is new information generated in such a manner that a hash value calculated from the new information is equal to the hash value stored in the target block. According to the information processing device 100, it becomes possible to link the generated new block before the target block in the BC. As a result, the information processing device 100 is enabled to ensure the BC consistency and reduce the BC data amount while maintaining the tamper resistance of the BC.

According to the information processing device 100, it becomes possible to delete one or a plurality of blocks from the BC, and to store the one or a plurality of blocks in a specific storage area. As a result, the information processing device 100 is enabled to back up the one or a plurality of blocks.

According to the information processing device 100, it becomes possible to use the first calculation method that enables calculation of the same hash value from different information. According to the information processing device 100, it becomes possible to generate a subsequent block to be linked after the block at the end of the BC storing the hash value of the first type calculated based on the block at the end of the BC by the first calculation method. According to the information processing device 100, it becomes possible to adopt, as a target block, a block storing the hash value of the first type among the plurality of blocks included in the BC. As a result, the information processing device 100 is enabled to easily make the hash value calculated from the new information equal to the hash value stored in the target block.

According to the information processing device 100, it becomes possible to generate, at predetermined timing, a subsequent block to be linked after the block at the end of the BC storing the hash value of the first type calculated based on the block at the end of the BC by the first calculation method. According to the information processing device 100, it becomes possible to use the second calculation method with hash value collision resistance higher than that of than the first calculation method. According to the information processing device 100, it becomes possible to generate, at times other than the predetermined timing, a subsequent block to be linked after the block at the end of the BC storing the hash value of the second type calculated based on the block at the end of the BC by the second calculation method. As a result, the information processing device 100 is enabled to improve the security of the BC.

According to the information processing device 100, it becomes possible to generate, at the predetermined timing, a subsequent first block to be linked after the block at the end of the BC storing key information to be used in the first calculation method. According to the information processing device 100, it becomes possible to further generate, after the first block is generated, a subsequent second block to be linked after the first block in the BC storing the hash value of the first type calculated based on the first block by the first calculation method. According to the information processing device 100, it becomes possible to extract information satisfying the specific condition from among a plurality of pieces of information stored in one or a plurality of blocks at the time of deleting, from the BC, the one or a plurality of blocks preceding the second block. According to the information processing device 100, it becomes possible to generate a new block storing new information including the extracted information based on the key information stored in the first block. As a result, the information processing device 100 is enabled to easily obtain the key information.

According to the information processing device 100, it becomes possible to store the key information in the first block in the state of being encrypted such that it may be decrypted after the specified time point. According to the information processing device 100, it becomes possible to generate, after the specified time point, a new block storing new information including the extracted information based on the key information stored in the first block. As a result, the information processing device 100 is enabled to improve the security of the BC.

According to the information processing device 100, it becomes possible to generate a new block as a genesis block. As a result, the information processing device 100 is enabled to avoid storage of a hash value in the new block, and to ensure the BC consistency.

According to the information processing device 100, it becomes possible to adopt a calculation method for calculating a chameleon hash value as the first calculation method. As a result, the information processing device 100 is enabled to generate a new genesis block while improving the security and ensuring the BC consistency.

Note that the control method described in the present embodiment may be implemented by executing a program prepared in advance, on a computer such as a PC or a workstation. The control program described in the present embodiment is executed by being recorded on a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the control program described in the present embodiment may be distributed via a network such as the Internet.

### REFERENCE SIGNS LIST

- 100: Information processing device
- 110, 700, 1000: BC
- 111 to 113, 701 to 710, 1001 to 1009: Block
- 200: BC management system
- 210, 910, 1020: Storage area
- 301: Application program
- 302: BC write API
- 303: BC write control unit
- 304: BC subsystem
- 400: Bus
- 401: CPU
- 402: Memory
- 403: Communication I/F
- 404: Recording medium I/F
- 405: Recording medium
- 406: Display control unit
- 407: Display device
- 408: Input I/F
- 409: Input device
- 410: Network
- 500: Storage unit
- 501: Acquisition unit
- 502: First generation unit
- 503: Second generation unit
- 504: Output unit
- 600: Blockchain subsystem
- 610: Block generation subsystem
- 611: Block generation unit
- 612: Normal hash generation unit
- 613: Time interval measurement unit
- 614: Chameleon hash generation unit
- 615: Timed cipher generation unit
- 620: Backup generation subsystem
- 621: Backup generation unit
- 622: Header recalculation unit
- 623: Timed cipher decryption unit
- 801: Mark
- 810: Key information
- 901, 1010: Genesis block

## Claims

1. A control method for causing a computer to perform a process comprising:
at a time of deleting, from a blockchain, one or a plurality of blocks that precedes a certain block among a plurality of blocks included in the blockchain, extracting information that satisfies a specific condition from among a plurality of pieces of information stored in the one or a plurality of blocks;
generating a new block that stores new information that includes the extracted information, the new information being generated such that a hash value calculated from the new information is equal to a hash value stored in the certain block; and
linking the generated new block before the certain block in the blockchain.

2. The control method according to claim 1, the method causing the computer to perform the process further comprising:
deleting the one or a plurality of blocks from the blockchain; and
storing the one or a plurality of blocks in a specific storage area.

3. The control method according to claim 1 or 2, the method causing the computer to perform the process further comprising:
generating a subsequent block to be linked after a block at an end of the blockchain, the subsequent block storing a hash value of a first type calculated based on the block at the end of the blockchain by a first calculation method that enables calculation of a same hash value from different information, wherein
the certain block includes a block that stores the hash value of the first type among the plurality of blocks included in the blockchain.

4. The control method according to claim 3, wherein the generating the subsequent block is configured to:
at predetermined timing, generate the subsequent block to be linked after the block at the end of the blockchain, the subsequent block storing the hash value of the first type calculated based on the block at the end of the blockchain by the first calculation method; and
at timing other than the predetermined timing, generate the subsequent block to be linked after the block at the end of the blockchain, the subsequent block storing a hash value of a second type calculated based on the block at the end of the blockchain by a second calculation method with hash value collision resistance higher than the hash value collision resistance of the first calculation method.

5. The control method according to claim 4, wherein
the generating the subsequent block further generates, after generating a subsequent first block to be linked after the block at the end of the blockchain, the first block storing key information to be used for the first calculation method, a subsequent second block to be linked after the first block in the blockchain, the second block storing the hash value of the first type calculated based on the first block by the first calculation method, at the predetermined timing,
the extracting extracts, at a time of deleting one or a plurality of blocks that precedes the second block from the blockchain, the information that satisfies the specific condition from among a plurality of pieces of information stored in the one or a plurality of blocks, and
the generating the new block generates, based on the key information stored in the first block, the new block that stores the new information that includes the extracted information, the new information being generated such that the hash value calculated from the new information is equal to the hash value of the first type stored in the second block.

6. The control method according to claim 5, wherein
the key information is stored in the first block in a state of being encrypted such that the key information may be decrypted after a specified time point, and
the generating the new block generates, after the specified time point, the new block that stores the new information that includes the extracted information, the new information being generated such that the hash value calculated from the new information is equal to the hash value of the first type stored in the second block, based on the key information stored in the first block.

7. The control method according to any one of claims 1 to 6, wherein the new block includes a genesis block.

8. The control method according to any one of claims 3 to 5, wherein the first calculation method includes a calculation method of calculating a chameleon hash value.

9. A control program that causes a computer to execute a process, the process comprising:
at a time of deleting, from a blockchain, one or a plurality of blocks that precedes a certain block among a plurality of blocks included in the blockchain, extracting information that satisfies a specific condition from among a plurality of pieces of information stored in the one or a plurality of blocks;
generating a new block that stores new information that includes the extracted information, the new information being generated such that a hash value calculated from the new information is equal to a hash value stored in the certain block; and
linking the generated new block before the certain block in the blockchain.

10. An information processing device comprising:
a control unit configured to:
at a time of deleting, from a blockchain, one or a plurality of blocks that precedes a certain block among a plurality of blocks included in the blockchain, extract information that satisfies a specific condition from among a plurality of pieces of information stored in the one or a plurality of blocks,
generate a new block that stores new information that includes the extracted information, the new information being generated such that a hash value calculated from the new information is equal to a hash value stored in the certain block, and
link the generated new block before the certain block in the blockchain.
